# EUROPÄISCHE PATENTSCHRIFT

(11) **EP 1 821 020 B1**
(45) Veröffentlichungstag und Bekanntmachung des Hinweises auf die Patenterteilung: **15.07.2009**
(21) Anmeldenummer: 06003340.4
(22) Anmeldetag: 18.02.2006
(51) Int. Cl.: F16L 23/24, F16L 23/04

(54) **Rohrkupplung für Flüssiggasleitung mit Nut**
Connector for liquid gas pipes having grooves
Raccord pour conduite de gas avec rainures

(43) Veröffentlichungstag der Anmeldung: 22.08.2007
(73) Patentinhaber: Minimax GmbH & Co KG, 23840 Bad Oldesloe (DE)
(72) Erfinder: Zlatintsis, Chrysafis, Dipl.-Ing., 23554 Lübeck (DE)
(74) Vertreter: Lüdtke, Frank

(56) Entgegenhaltungen:
- WO-A-20/05010422
- DE-A1- 2 807 893
- GB-A- 1 132 934
- GB-A- 2 164 401
- US-A- 4 418 948
- US-A- 4 438 958
- US-A- 4 471 979
- US-A- 5 630 591

## Beschreibung

Die Erfindung betrifft eine Rohrkupplung für eine Flüssiggasleitung mit Nut entsprechend dem des ersten Patentanspruch.

Die Erfindung ist überall dort einsetzbar, wo Rohrleitungen oder/und Armaturen sowie Formstücke wie T-Stücke oder Bögen, in denen Medien, vorzugsweise verflüssigte Gase mit Betriebstemperaturen bis -200°C transportiert werden, miteinander so zu verbinden sind, daß eine dichte Verbindung entsteht. Die Rohrverbindungen sollen nur in Ausnahmefällen gelöst werden, also nicht, um das Rohrsystem zu befüllen oder zu leeren. Die erfindungsgemäße Rohrkupplung ist für das Verbinden von Rohrleitungen in Rohrleitungssystemen von Feuerschutzanlagen geeignet, in denen verflüssigte Gase wie Argon, Stickstoff oder CO₂ in relativ kurzer Zeit transportiert werden müssen und in denen sich schnell ändernde Temperaturen und Drücke herrschen.

Im Tiefsttemperaturbereich beispielsweise bis -200°C werden Rohrleitungen nach heutigem technischen Stand in Regel mittels Schweiß- oder Flanschverbindung miteinander verbunden. Schweißverbindungen sind möglich, aber unter Baustellenbedingungen nur schwer herstellbar. Aufgrund der gewünschten Materialbeständigkeit bei Tiefsttemperaturen müssen kältebeständige Werkstoffe eingesetzt werden. Bei der Flutung der Rohrleitung mit verflüssigten Kryogasen und Abkühlung tritt an Leitungsverbindungen, z. B. an einer Flanschverbindung, eine Kontraktion der Materialien auf. Diese Kontraktion verursacht Leckageöffnungen oder -spalten an den Fügestellen zwischen Flansch und Dichtung. Das trifft insbesondere zu für Leitungen, die in einer relativ kurzen Zeit thermisch belastet werden, wie das beispielsweise dann der Fall ist, wenn verflüssigte Gase wie Argon, Stickstoff oder CO₂ in Leitungen von Feuerlöschanlagen geflutet werden, so daß bei hohem Druck und sehr tiefen Temperaturen bisher bekannte nicht geschweißte Leitungsverbindungen Mängel im Hinblick auf die Dichtheit an der Verbindungsstelle der zu verbindenden Leitungen aufweisen.

In EP 0 533 522 B1 ist eine Übertragungsleitung für ein kryogenes Fluid beschrieben. Aus dem Dokument geht hervor, wie eine derartige Leitung aufgebaut sein kann und welchen Bedingungen die Leitung ausgesetzt ist, wobei eine Rohrkupplung in diesem Dokument nicht beschrieben ist.

DE 33 10 034 A1 beschreibt eine Anordnung zum Verbinden von Leitungsrohren zum Transportieren von tiefgekühlten Medien mittels einer Steckverbindung. Dabei handelt es sich um eine Rohrkupplung für eine häufige Betätigung, bei der die zu verbindenden Teile an ihren Enden ineinander gesteckt sind, wobei die Steckverbindung durch eine bei Normaltemperatur mit Spiel auf den zu verbindenden Enden aufsetzende Muffe aus Kunststoff erfolgt. Die Muffe weist an ihrer Oberfläche ringförmige Ausnehmungen auf. Durch die Kunststoffmuffe wird eine dauerhafte Abdichtung erreicht, wobei geringe Wärmeverluste auftreten. Inwiefern sich die beschriebene Verbindung auch für höhere Drücke eignet, ist nicht beschrieben. Die Lösung sieht vor, ungleichartige Rohrenden miteinander zu verbinden. Die beiden Rohrenden weisen auch keine umlaufende Nut auf.

Aus DE 20 002 810 U ist eine Steckkupplung für Leitungssysteme fluider Medien und Dichtungsteil einer solchen Steckkupplung bekannt, das vorteilhaft für Druckmittelsysteme einsetzbar ist und aus einem ersten Kupplungsteil besteht, welches ein gehäuseartiges Aufnahmeteil darstellt und einem zweiten Kupplungsteil, welches das Steckerteil darstellt und über eine umfangsgemäß wirkende Dichtung abgedichtet wird. Die Steckkupplung ist für Kraftfahrzeugbremssysteme oder auch für Gase wie Kohlendioxid in Klimaanlagen oder Wasserstoff in Brennstoffzellen einsetzbar, das heißt für Fälle, wobei die Forderung nach einer hohen Dichtwirkung erhoben wird und anspruchsvolle Betriebsbedingungen herrschen. Um Dichtheit zu erreichen, kuppeln zwei Dichtelemente zusammen, wobei ein erstes Dichtelement aus einem metallischen Wellenrohr besteht, und ein zweites Dichtelement aus einem polymeren Werkstoff oder Weichmetall.

In EP 0 961 073 B1 ist eine kryogene Fluidkupplung beschrieben. Dieser sehr aufwendige Kupplungsmechanismus weist ein Ventil zum Blockieren des Durchganges auf und hat somit nicht nur die Funktion, zwei Rohre miteinander zu verbinden, sondern auch nach Lösung der Verbindung dafür zu sorgen, daß beide Rohrenden dicht verschlossen sind. Ein O-Ring als Dichtungselement soll vermieden werden, da die Elastizität eines O-Ringes bei Schrumpfung verlorengeht und insbesondere, wenn der Kuppler unter kryogenen Temperaturen eingesetzt wird. Das trifft insbesondere für bestimmte Temperaturbereiche und für hohe Drücke zu. Zum schnellen Lösen der beschriebenen Kupplung wird eine Feder verwendet.

Weiterhin sind Kupplungen für Gasarmaturen wie DE 198 22 369 A1 bekannt, die aber nicht für tiefe Temperaturen und hohe Drücke einzusetzen sind oder auch Kupplungen für steckbare Verbindungen für Rohre mit Armaturen und Fittings, wie das in DE 196 54 435 A1 beschrieben wird. Diese Verbindungen dienen allerdings dazu, Leitungen bei normalen Temperaturen und ohne Druck miteinander zu verbinden, wobei keine Rohre, sondern Schläuche mit Armaturen oder Fittings miteinander verbunden werden.

In DE 197 19 066 C2 ist eine Rohrkupplung mit einer Hülse, die eine Dichtung aufnimmt und innerhalb eines Stützkörpers angeordnet ist, beschrieben. Der umgebende Stützkörper ist mehrteilig. Der zwischen beiden Rohren befindliche Anschlagring befindet sich innerhalb einer Hülse und ist als Lippendichtung ausgebildet. Da Lippendichtung und Anschlagring als ein einziges Teil ausgebildet sind, ist bei Verschleiß das gesamte Teil zu wechseln. Die umgebende Hülse weist eine geringe Stabilität auf, so daß diese Rohrkupplung für hohe Drücke und tiefe Temperaturen nicht geeignet ist, denn ein geringer Formschluß ist nicht für höhere Temperaturdifferenzen geeignet.

In DE 198 10 206 C1 wird eine ähnliche Kupplung beschrieben, wobei das umgebende Teil als Manschette ausgebildet ist, so daß sich die Bauweise zumindest des umgebenden Teiles vereinfacht. Dennoch ist auch diese Rohrkupplung nicht geeignet, um Rohrleitungen zu verbinden, die bei tiefen Temperaturen eingesetzt werden und in denen sich hohe Drücke ausbilden.

Aus GB 2 164 401 A ist eine Rohrkupplung für Flüssiggasleitungen mit Nut bekannt, die geeignet ist für den Einsatz in Feuerlöschanlagen bei Tiefsttemperaturen. Die Rohrkupplung besteht aus zwei Rohrenden, an deren Ende eine Nut für ein Verbindungsteil angeordnet ist umfassend einen Zwischenring, der mit einer Seite gegen die Halbschale wirkt und seiner anderen Seite mit einer Dichtung verbunden ist, die gegen die Oberfläche beider Rohrenden wirkt, wobei eine Halbschale, die in die Nut der Rohrenden eingreift, diese zusammenhält. Der Zwischenring bildet zwar Kammern, dabei handelt es sich aber nicht um Kammern, in denen zwei Dichtungen anordenbar sind, wobei jede gegen ein Rohrende wirkt, sondern der Zwischenring wirkt zwischen der Halbschale und der Dichtung. Eine weitere Dichtung zwischen jedem einzelnen Rohrende und dem Zwischenring oder der vorhandenen Dichtung sind nicht gegeben.

WO 2005/010422 A beschreibt eine Dichtung, bei der zwei Halbschalen zwei Kammern bilden, in denen ein Dichtring angeordnet ist, der beide Rohrenden überbrückt und Dichtungen auf jedem Rohrende festhält. Dazu sind Ausnehmungen vorhanden. Eine Kammer, in die eine Dichtung einlegbar ist, die gegen dieses einzelne Rohrende wirkt, ist nicht vorhanden. Auf diese Weise ist es auch nicht möglich, daß sowohl der Zwischenring als auch die Dichtung gegen jedes einzelne Rohrende wirkt.

DE 28 07 893 A1 beschreibt eine Rohrkupplung, bei der Halbschalen zwei Rohrenden miteinander verbinden, wobei zwischen Halbschale und Rohr ein Rohrbundpaar angeordnet ist, welches gegen jedes einzelne Rohrende wirkt und ein Dichtelement 3 zwischen den Rohrbundpaaren angeordnet ist. Die Abdichtung erfolgt, indem das Rohrbundpaar gegen die Rohrenden wirkt und die Dichtung zwischen den Rohrbundpaaren und den offenen Rohrenden wirkt, nicht aber zwischen der Mantelfläche der Rohrenden und den offenen Rohrenden.

US-A 4 471 979 beschreibt eine Rohrkupplung für die Leitungen, die eine umlaufende Wölbung aufweisen, mittels zweier Halbschalen, die eine Kammer bilden, in der ein Zwischenring angeordnet ist, der eine Kammer aufweist. Diese Kammer enthält allerdings kein Dichtungselement, sondern dient dazu, eine Ausdehnung zu ermöglichen. Eine Dichtung in Kammern eines Zwischenringes ist dem Dokument nicht zu entnehmen.

US-A 4 418 948 beschreibt eine Kupplung für Rohrenden, die eine Erhöhung aufweisen, also keine umlaufende Nut. Mittels einem Spannband oder Halbschalen werden Dichtungselemente über die Erhebungen der Rohrenden gespannt, so daß Dichtheit eintritt. Die verwendeten Dichtungselemente und -ringe bilden auch Kammern. Dabei handelt es sich allerdings nicht um Kammern, in die Dichtungen so einlegbar sind, daß sie gegen die Oberfläche eines jeden Rohrendes wirken.

Es ist daher Aufgabe der Erfindung, eine Rohrkupplung für eine Flüssigkeitsleitung mit einer umlaufenden Nut für den Einsatz in Feuerlöschanlagen zu entwickeln, mit der es möglich ist, auch bei extremen Betriebsbedingungen wie hohem Druck und starker Temperaturabsenkung zwei mit einer Nut versehene Rohrleitungsenden leckagefrei miteinander zu verbinden, wobei durch die temperaturbedingte Veränderung der Abmaße der Verbindungsstelle eine gleichbleibende oder steigende Dichtqualität erreicht wird.

Diese Aufgabe wird durch eine Rohrkupplung entsprechend den Merkmalen des ersten Patentanspruches erfüllt.

Unteransprüche geben vorteilhafte Ausgestaltungen der Erfindung wieder.

Die erfindungsgemäße Rohrkupplung für Flüssiggasleitungen mit Nut, an deren Ende ein Verbindungsteil angeordnet ist, welches in die Nut eingreift, besteht aus einem Zwischenring, der mindestens eine in Richtung auf jedes Rohrende offene Kammer aufweist. Als Rohrende ist der Bereich des Rohres zu verstehen, der sich in der Nähe des Endes befindet. Diese Kammer ist auf jeder Seite des Zwischenringes angeordnet, wobei der Zwischenring zwischen die Stirnseiten der Rohrenden eingelegt und zwischen diesem eine Art Distanzstück bilden kann. Das Distanzstück ermöglicht ein Ausrichten des Zwischenringes zwischen die Rohrenden. Diese Kammer kann bei niederen Beanspruchungsfällen auch allein durch die Innenflächen des Ringes, die Außenfläche des Rohrendes und der Rohrschelle gebildet werden. Beidseitig dieses Distanzstückes umgibt der Zwischenring beide Rohrenden mit seinem weitestgehend zylindrischen Teil.
Der Werkstoff des Zwischenringes weist vorzugsweise einen höheren Wärmeausdehnungskoeffizienten auf, als der Werkstoff der Rohre. Dadurch kommt es bei Temperaturabnahme zu einer zunehmenden Dichtheit, da der Zwischenring die Dichtung stärker auf die Rohrenden preßt.

In der Kammer des Zwischenringes ist eine Dichtung angeordnet, die gegen die Oberfläche des jeweiligen Rohrendes und dem Innenumfang des Rings wirkt.

Eine Anordnung von mehreren hintereinanderliegenden Kammern mit einer Dichtung gegenüber dem Rohrende ist dann erforderlich und möglich, wenn erhöhte Dichtigkeitsanforderungen oder besondere Dichtprobleme bestehen. Es können also auf jedes Rohrende mehrere Dichtungen in mehreren Kammern wirken, das heißt zwei, drei, vier oder mehr. Im Normalfall ist es allerdings vorteilhaft, gegenüber jedem Rohrende jeweils eine Kammer mit jeweils einer Dichtung anzuordnen.

Die Kammern sind umlaufend anzuordnen. In gleicher Weise sind auch die Dichtungen umlaufend anzuordnen.

In die Nut der Rohrenden greifen verbindende Halbschalen ein, die auf ihrer Innenseite eine Ausnehmung für den Zwischenring aufweisen. Diese Ausnehmung entspricht der Form des Zwischenringes. Statt der Halbschalen sind auch andere mehrteilige Schaden wie dreiteiligevier- oder fünfteilige Schalen denkbar.

Vorteilhaft ist es, die Schalen auf einer Seite aufklappbar auszuführen und auf der anderen Seite mittels Schrauben oder Schrauben und Muttern miteinander zu verbinden.

Weiterhin ist es vorteilhaft, als Dichtung eine Lippendichtung, einen O-Ring, eine V-Dichtung oder einen Quadring zu verwenden.

Die erfindungsgemäße Lösung hat den Vorteil, daß es möglich ist, zwei mit einer Nut versehene Rohrleitungsenden auch bei extremen Bedingungen wie hohem Druck und tiefer Temperatur bzw. sehr starker Abkühlung leckagefrei miteinander zu verbinden, wobei an der Verbindungsstelle bei sinkenden Temperaturen durch die Wirkung des Zwischenringes eine hohe gleichbleibende oder steigende Dichtqualität gewährleistet wird.
- Figur 1:: Einzelheit Z der Figur 2
- Figur 2:: Teilschnitt durch die Rohrkupplung.
- Figur 3:: Einschnitt Z in Variante.

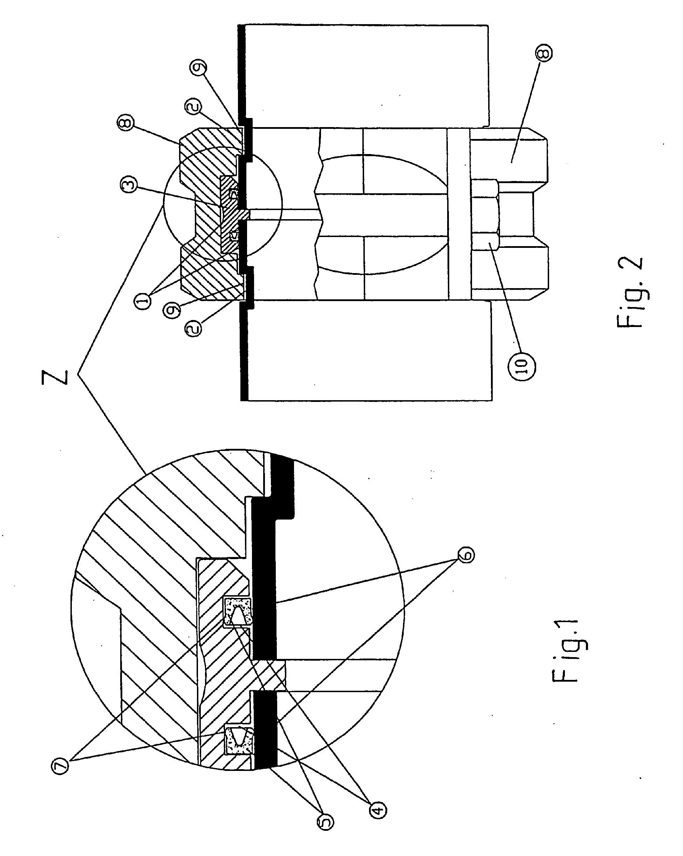

Die erfindungsgemäße Rohrkupplung ist im Teilschnitt in der *Figur 2* gezeigt, wobei zwischen zwei Rohrenden 1 der Zwischenring 3 angeordnet ist und die beiden Rohrenden 1 auf Distanz hält. Zum besseren Einpassen zwischen die Rohrenden 1 weist der Zwischenring 3 eine Fase in Richtung auf die Rohrenden 1 auf. Weiterhin ist zu jedem Rohrende 1 hin eine umlaufende Kammer 4 vorgesehen, wie das aus *Figur 1* hervorgeht, die die Einzelheit Z zeigt. In der Kammer befindet sich die Dichtung 5, welche umlaufend ist und bei Druckbeaufschlagung hervorgehend aus dem Inneren des Rohres gegen die Rohrendenaußenfläche und die Ringinnenfläche wirkt. Bei abfallenden Temperaturen preßt der kontrahierende Ring 3 zusätzlich die Dichtung 5, womit die Dichtheitsqualität gesteigert wird. Beide Rohrenden 1 sind durch Halbschalen 8 miteinander verbunden, die in die Nut 2 auf dem Rohrende 1 eingreifen und durch Schrauben 10 miteinander verbunden sind. Die Halbschalen 8 weisen umlaufend einen Hohlraum für den Zwischenring 3 auf und umschließen diesen.

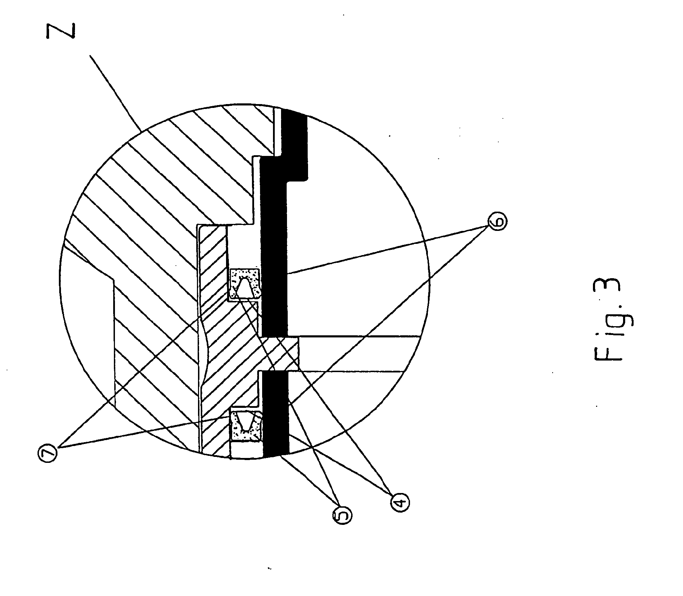

Die *Figur 3* zeigt die Einzelheit Z in einer Variante, bei der die Kammer 4 für die Dichtung 5 vom Zwischenring 3, dem Rohr 1 und der Halbschale 8 gebildet wird.

### Liste der verwendeten Bezugszeichen

- 1: Rohrende
- 2: Nut auf dem Rohrende
- 3: Zwischenring
- 4: Kammer mit Zwischenring
- 5: Dichtung
- 6: Dichtfläche
- 7: Dichtfläche
- 8: Halbschale
- 9: Feder der Halbschale
- 10: Schraube von 8

## Patentansprüche

1. Rohrkupplung für Flüssiggasleitungen mit einer umlaufenden Nut für den Einsatz in Feuerlöschleitungen bei Tiefsttemperaturen, bestehend aus
- zwei Rohren, deren Enden (1) eine umlaufende Nut (2) aufweisen,
- einem Zwischenring (3) mit einem Distanzstück zwischen den Stirnseiten der Rohrenden (1), der den Umfang beider Rohrenden umfaßt und in Richtung auf jedes Rohr eine Kammer (4) für eine darin befindliche Dichtung (5) aufweist,
- einer Dichtung (5) in der Kammer (4), die gegen die Oberfläche des Rohrendes (1) wirkt,
- einer die Rohrenden (1) verbindenden Halbschale (8), die in die Nut (2) der Rohrenden (1) eingreift und diese zusammenhält und
- einer Ausnehmung für den Zwischenring (3) auf der Innenseite der Halbschalen (8).

2. Rohrkupplung nach Anspruch 1, **dadurch gekennzeichnet, daß** der Zwischenring (3) einen annähernd gleichen oder höheren Wärmeausdehnungskoeffizienten aufweist als die zu verbindenden Rohrenden (1).

3. Rohrkupplung nach Anspruch 1 und 2, **dadurch gekennzeichnet, daß** die Halbschalen (8) mittels Schrauben (10) miteinander verbunden sind.

4. Rohrkupplung nach den Ansprüchen 1 bis 3, **dadurch gekennzeichnet, daß** die Dichtung (5) eine Lippendichtung, ein O-Ring, einen Quadring oder eine V-Dichtung darstellt.

## Claims

1. A pipe coupling for liquid gas lines with a circumferential groove for use in fire mains at very low temperatures, consisting of
- two pipes the ends (1) of which comprise a circumferential groove (2),
- an intermediate ring (3) with a spacer between the end sides of the pipe ends (1) that encompasses the circumference of the two pipe ends and comprises, in the direction of each pipe, a chamber (4) for a seal (5) located therein,
- a seal (5) in the chamber (4) that acts against the surface of the pipe end (1),
- a half shell (8) connecting said pipe ends (1), said half shell engaging the groove (2) of the pipe ends (1) and holding these together and
- a recess for the intermediate ring (3) on the inner side of the half shells (8).

2. The pipe coupling as set forth in claim 1, **characterized in that** the intermediate ring (3) comprises a thermal dilatation coefficient that is approximately equal to or higher than the pipe ends (1) to be connected.

3. The pipe coupling as set forth in claim 1 and claim 2, **characterized in that** the half shells (8) are joined together by means of screws (10).

4. The pipe coupling as set forth in the claims 1 through 3, **characterized in that** the seal (5) constitutes a lip seal, an O ring, a quad ring or a V seal.

## Revendications

1. Raccord de tube pour conduites de gaz liquéfié avec une gorge circonférentielle destiné à être utilisé sur des conduites d'extinction d'incendie à températures très basses, du type constitué
- de deux tubes dont les extrémités (1) comportent une gorge circonférentielle (2),
- d'une bague entretoise (3) avec une pièce d'écartement entre les faces d'extrémité des extrémités de tube (1) qui entoure le pourtour des deux extrémités des tubes et qui comporte, en direction de chaque tube, une chambre (4) pour un joint d'étanchéité (5) s'y trouvant,
- d'un joint d'étanchéité (5) dans la chambre (4) qui agit contre la surface de l'extrémité du tube (1),
- d'une demi-coque (8) qui relie les extrémités de tube (1) et qui s'engage dans la gorge (2) des extrémités de tube (1) et les maintient ensemble et
- d'un évidement pour la bague entretoise (3) sur la face intérieure des demi-coques (8).

2. Raccord de tuyau selon la revendication 1, **caractérisé en ce que** la bague entretoise (3) comporte un coefficient de dilatation thermique à peu près égal ou supérieur à celui des extrémités de tube (1) qu'il y a lieu de relier.

3. Raccord de tuyau selon la revendication 1 et 2, **caractérisé en ce que** les demi-coques (8) sont reliées ensemble au moyen de vis (10).

4. Raccord de tuyau selon les revendications 1 à 3, **caractérisé en ce que** le joint d'étanchéité (5) constitue un joint à lèvres, un joint torique, un joint Quad-Ring ou un joint en V.
